# EUROPEAN PATENT APPLICATION

(11) **EP 4 484 901 A1**
(43) Date of publication of application: **01.01.2025**
(21) Application number: 23759864.4
(22) Date of filing: 16.02.2023
(51) Int. Cl.: G01D 21/00, G01K 3/02, G01D 5/244

(54) **SENSOR DEVICE AND PROGRAM**

(30) Priority: 25.02.2022 JP 2022027969
(71) Applicant: DENSO CORPORATION, Kariya-city, Aichi 448-8661 (JP)
(72) Inventor: IMABAYASHI Takuya, Kariya-city, Aichi 448-8661 (JP)
(74) Representative: Kuhnen & Wacker Patent- und Rechtsanwaltsbüro PartG mbB
(86) International application number: PCT/JP2023/005558
(87) International publication number: WO 2023/162863

(57) **Abstract**

A sensor device includes a boost circuit (31) configured to increase voltage from a battery (7), an internal power supply (41, 42) configured to supply the voltage that is increased by the boost circuit, and a controller (50). The controller includes a drive signal generating unit (51) configured to generate a boost-circuit drive signal for driving the boost circuit, and a calculating unit (52, 53, 55) configured to calculate, as a calculated value, a value in accordance with a state of a detection target (10, 21, 45) based on a sensor signal that is generated using the internal power supply. The controller is further configured to use a substitute value as an internal recognition value of the state of the detection target, instead of the calculated value based on the sensor signal when turning off the boost-circuit drive signal to stop the boost circuit.

## Description

### CROSS REFERENCE TO RELATED APPLICATIONS

The present application is based on Japanese Patent Application No. 2022-027969 filed on February 25, 2022. The entire disclosure of which is incorporated herein by reference.

### TECHNICAL FIELD

The present disclosure relates to a sensor device and a program.

### BACKGROUND ART

Conventionally, there is a temperature detecting device that detects the temperature of an inverter element. For example, Japanese Patent Literature 1 discloses a temperature detecting device that transmits pulse signals depending on the temperature detected by a temperature sensor to an integrated circuit.

### PRIOR ART LITERATURE

### PATENT LITERATURE

Patent Literature 1: JP 2017-106931 A

### SUMMARY OF INVENTION

In Patent Literature 1, when the temperature of the element falls outside a normal operating range, the pulse signals are stuck high or low, which makes it impossible to detect the temperature correctly. Thus, the temperature detecting device outputs fail signals and stops detecting the temperature.

Here, when the power supply for an output device of a detection value of the temperature sensor is stopped, the temperature detecting device may output fail signals even when the temperature sensor operates properly. In this case, the temperature of the element is recognized as being outside the normal operating range and a normal control for an inverter and the like cannot be maintained. Similar situations may occur with sensors other than the temperature sensor. It is an objective of this disclosure to provide a sensor device that can avoid erroneous detection of the state of a detection target and a program thereof.

The sensor device of the present disclosure includes a boost circuit, an internal power supply, and a controller. The boost circuit is configured to increase a voltage from a battery. The internal power supply is configured to supply the voltage that is increased by the boost circuit. The controller includes a drive signal generating unit configured to generate a boost-circuit drive signal for driving the boost circuit, and a calculating unit configured to calculate a value in accordance with a state of a detection target based on a sensor signal that is generated using the internal power supply to obtain a calculated value. The controller is further configured to use a substitute value as an internal recognition value of the state of the detection target instead of the calculated value based on the sensor signal when turning off the boost-circuit drive signal to stop the boost circuit. This makes it possible to avoid erroneous detection of the state of the detection target.

The present disclosure is also provided as a program for a sensor device. The program is configured to cause at least one controller to generate a boost-circuit drive signal for driving a boost circuit, calculate a value in accordance with a state of a detection target based on a sensor signal that is generated using an internal power supply to obtain a calculated value. The internal power supply supplies a voltage increased by the boost circuit. The program is further configured to cause the at least one controller to use a substitute value as an internal recognition value of the state of the detection target instead of the calculated value based on the sensor signal when turning off the boost-circuit drive signal to stop the boost circuit. This provides similar effects as the sensor device.

### BRIEF DESCRIPTION OF THE DRAWINGS

The above and other objects, features and advantages of the present disclosure will become more apparent from the following detailed description made with reference to the accompanying drawings. In the drawings:
FIG. 1 is a block diagram illustrating a configuration of a vehicle drive system according to one embodiment;
FIG. 2 is a block diagram illustrating a control unit according to the embodiment;
FIG. 3 is a flowchart for processing of calculating a sensor value according to the embodiment; and
FIG. 4 is a time chart for explaining the processing of calculating a sensor value according to the embodiment.

### EMBODIMENTS FOR CARRYING OUT INVENTION

### Embodiment

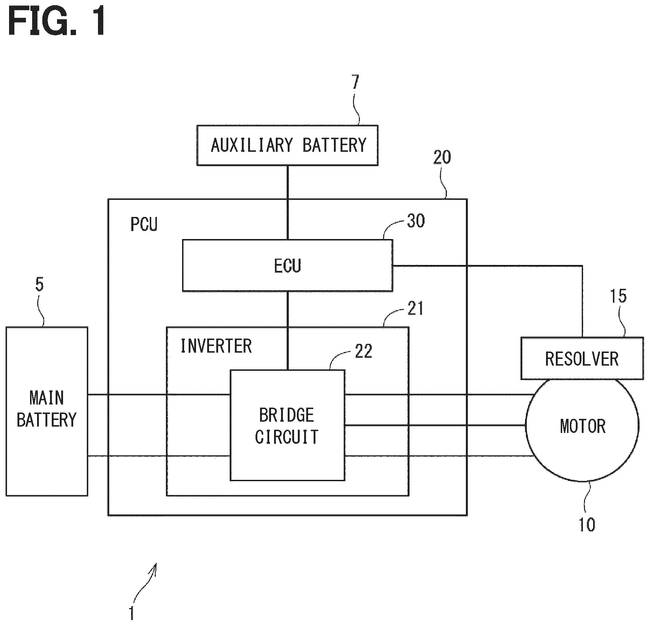

Hereinafter, a sensor device and a program according to the present disclosure will be described with reference to the drawings. An embodiment is shown in FIGS. 1 to 4. As shown in FIG. 1, a vehicle drive system 1 includes a main battery 5, an auxiliary battery 7, a main motor 10, a power control unit 20, and the like.

The main battery 5 is a direct current power source including a rechargeable secondary battery such as a nickel hydrogen battery or a lithium ion battery. The power of the main battery 5 is supplied with the main motor 10 mainly via a bridge circuit 22 and is used to drive the main motor 10. The main battery 5 is charged by electric power regenerated by the main motor 10. The main battery 5 can be also charged by an external power source (not shown). The auxiliary battery 7 is a secondary battery such as a lead storage battery, and supplies power with a control unit 30 and auxiliary devices (not shown).

The main motor 10 is a permanent magnet synchronous motor that uses three-phase alternating current. The main motor 10 is a so-called "motor generator" that has functions both as an electric motor and as a generator. The main motor 10 is used as a driving source for the vehicle. The vehicle may be an electric vehicle that drives only by the driving force of the main motor 10, or a hybrid vehicle that drives by the driving force of both the main motor 10 and an engine (not shown). The main motor 10 is provided with a resolver 15 which is a rotation angle sensor that detects an angle of rotation.

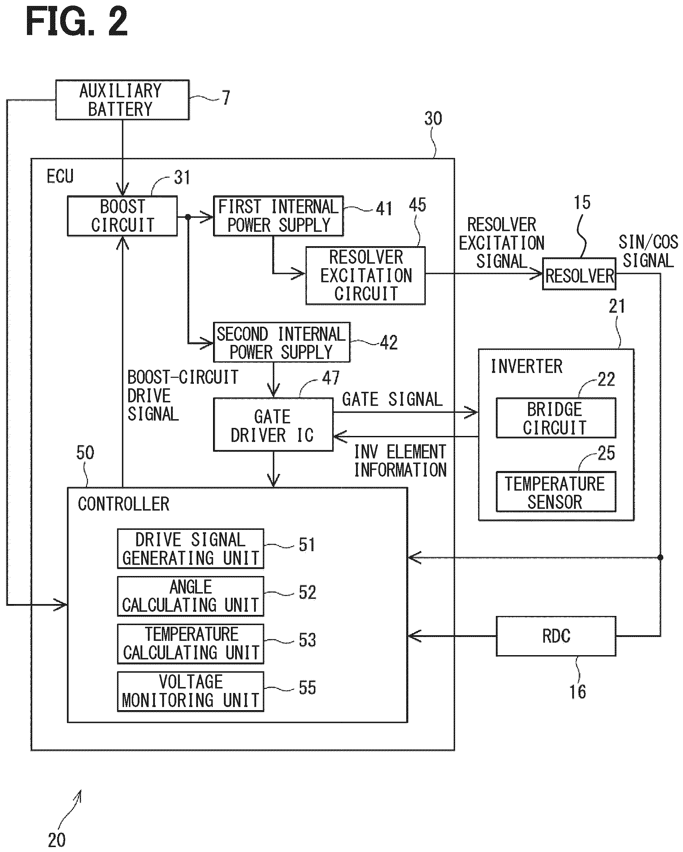

As shown in FIGS. 1 and 2, the power control unit 20 includes an inverter 21, the control unit 30, and the like. The inverter 21 includes the bridge circuit 22 and a temperature sensor 25. The bridge circuit 22 has inverter elements (e.g., IGBTs) which are connected in a bridge configuration. The bridge circuit 22 converts the direct current power supplied from the main battery 5 into three-phase alternating current power, and outputs the alternating current power to the main motor 10. The temperature sensor 25 detects the temperature of the inverter elements that form the bridge circuit 22. In the drawing, the power control unit is abbreviated as "PCU" and the control unit is abbreviated as "ECU."

As shown in FIG. 2, the control unit 30 includes a boost circuit 31, a first internal power supply 41, a second internal power supply 42, a resolver excitation circuit 45, a gate driver integrated circuit (IC) 47, and a controller 50. The control unit 30 operates using power of the auxiliary battery 7. The boost circuit 31 has a boost element such as an IGBT and switches the boost element to increase the voltage of the auxiliary battery 7 (e.g., 12 V). The boost circuit 31 generates increased voltages for the first internal power source 41 and the second internal power source 42. In this embodiment, the first internal power supply 41 is, for example, a 30 V power supply, and the second internal power supply is, for example, a 17 V power supply, but the number of internal power supplies and the increased voltage may be different.

The resolver excitation circuit 45 generates a resolver excitation signal using power supplied from the first internal power supply 41. The generated resolver excitation signal is output to the resolver 15. The resolver 15 uses the resolver excitation signal to output a sine signal and a cosine signal to the controller 50. The sine signal and the cosine signal are angle signals in accordance with the rotational position of the main motor 10. Further, a resolver digital converter (RDC) 16 calculates an angle based on the sine signal and the cosine signal output from the resolver 15, and outputs digital signals in accordance with the calculated angle to the controller 50. Hereinafter, the sine signal and the cosine signal output from the resolver 15 will be referred to as resolver signals.

The gate driver IC 47 is supplied with power from the second internal power supply 42 and outputs a gate signal to the inverter 21. Furthermore, the gate driver IC 47 obtains values such as a detection value of the temperature sensor 25 and a detection value of a current sensor (not shown) as inverter element information. The gate driver IC 47 outputs a temperature detection signal, which is a pulse signal whose duty is changed depending on the temperature of the inverter element, to the controller 50.

The controller 50 is mainly composed of a microcontroller, and internally includes a CPU, a ROM, a RAM, an I/O, and a bus line (not shown) for connecting these components. Each processing executed by the controller 50 may be software processing which is implemented by causing the CPU to execute a program stored in a memory device such as a ROM (i.e., computer-readable non-transitory tangible storage medium) or may be hardware processing which is implemented by a special purpose electronic circuit. The controller 50 is supplied with power from the auxiliary battery 7 via a regulator (not shown) without through the boost circuit 31.

The controller 50 has, as functional blocks, a drive signal generating unit 51, an angle calculating unit 52, a temperature calculating unit 53, a voltage monitoring unit 55. The drive signal generating unit 51 is configured to generate a boost-circuit drive signal for driving the boost circuit 31, and to output the boost-circuit drive signal to the boost circuit 31.

The angle calculating unit 52 obtains AD converted values of the sine signal and the cosine signal output from the resolver 15, and calculates information relating to the rotational position of the main motor 10 by arctangent function and the like. The information relating to the rotational position of the main motor 10 includes the rotation speed, the resolver angle, and the electrical angle.

The temperature calculating unit 53 obtains a temperature detection signal, which is generated depending on the temperature of the inverter element, from the gate driver IC 47, and calculates the temperature of the inverter element based on the duty of the obtained temperature detection signal. The voltage monitoring unit 55 obtains a converted voltage that is obtained by converting the power voltage of the first internal power supply 41, which is used by the resolver excitation circuit 45, to fall within a predetermined range (for example, 0 v to 5 v). The voltage monitoring unit 55 monitors whether the first internal power supply 41 operates within a normal range using the converted voltage.

The resolver excitation circuit 45 and the gate driver IC 47 require a voltage higher than that of the auxiliary battery 7. Thus, the power generated by the boost circuit 31 is supplied to the resolver excitation circuit 45 through the internal power supplies 41, 42.

When the boost circuit 31 increases the voltage, the boost element is switched, which generates noise. Furthermore, as vehicles are becoming more electrified, Electromagnetic Compatibility (EMC) requirements tends to become stricter. For example, when the boost circuit 31 is operating during a charge of the main battery 5 by an external power source, the EMC requirements may not be met due to the switching noise.

Therefore, in this embodiment, while the main battery 5 is charged, the operation of the boost circuit 31 is stopped. When the boost circuit 31 is stopped, the resolver excitation circuit 45 and the gate driver IC 47 which operates using power from the internal power supplies 41, 42 are stopped.

On the other hand, power is supplied with the controller 50 without through the boost circuit 31. Thus, the controller 50 keeps operating while the boost circuit 31 is stopped. In this case, when the controller 50 continues detecting the temperature of the inverter element based on the temperature detection signal that is generated by the gate driver IC 47, the controller 50 may erroneously determine that the temperature of the inverter element is out of the normal range even when the actual temperature of the inverter element is within the normal range.

Thus, in this embodiment, when the boost circuit 31 is appropriately stopped by an instruction from the controller 50 for charging the main battery 5 and the like, the controller 50 uses a substitute value as an internal recognition value of the microcontroller instead of using a calculated value based on the sensor signal that is generated using the internal power supplies 41, 42. Here, "the sensor signal that is generated using the internal power supply" does not only refer to cases where the power of the internal power supplies 41, 42 is used to operate the sensor itself, and also refer to cases where the power of the internal power supplies 41, 42 is used for outputting signals from the sensor to the controller 50. Hereinafter, a sensor that uses the power of the internal power supplies 41, 42 to generate a sensor signal will be referred to as a "increased-voltage using sensor". It should be noted that calculation based on detection signals from sensors other than the increased-voltage using sensor may continue even when the boost circuit 31 is stopped.

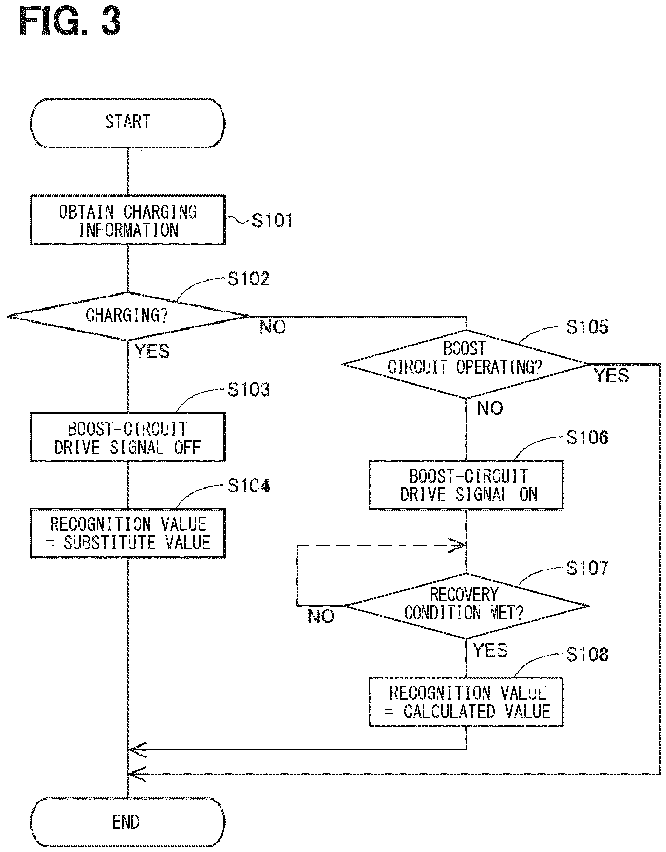

The processing of calculating the sensor value of the present embodiment will be described with reference to the flowchart of FIG. 3. This processing is executed by the controller 50 at a predetermined cycle. Hereinafter, "step" may be simply referred to as a symbol "S."

In S101, the controller 50 obtains charging information related to the charging state of the main battery 5 from the vehicle system. In S102, the controller 50 determines whether the main battery 5 is being charged by an external power source. When the controller 50 determines that the main battery 5 is being charged (S102: YES), the processing proceeds to S103. The charging in this step does not mean charging by regeneration and the main motor 10 is stopped. When the controller 50 determines that the main battery 5 is not been charged (S102: NO), the processing proceeds to S105.

In S103, the drive signal generating unit 51 turns off the boost-circuit drive signal to stop the boost circuit 31. In S104, the controller 50 uses the substitute value as the internal recognition value in the microcontroller of the increased-voltage using sensor.

When the boost circuit 31 is stopped, the temperature detection signal that is generated by the gate driver IC 47 is stopped. Thus, the controller 50 may erroneously recognize that the temperature of the inverter element is out of the normal range even though the actual temperature of the inverter element is within the normal range. Therefore, to prevent erroneous detection of the temperature of the inverter element, when the boost circuit 31 is stopped, the controller 50 keeps the previous value as the internal recognition value instead of the calculated value that is calculated based on the temperature detection signal generated by the gate driver IC.

When the boost circuit 31 is stopped, the voltage of the first internal power supply 41, which is the power supply for the resolver excitation circuit 45, is 0 V. Thus, the controller 50 may erroneously recognize that the resolver excitation circuit 45 is out of normal operation. In order to prevent erroneous detection of the power voltage of the resolver excitation circuit 45, when the boost circuit 31 is stopped, the controller 50 uses a substitute value as the internal recognition value instead of the detected value of the power voltage.

Furthermore, when the boost circuit 31 is stopped, the resolver excitation signal is stopped and the resolver signal becomes unstable, which may cause unstable rotational position of the main motor 10. Therefore, in order to prevent erroneous detection of the rotational position of the main motor 10, when the boost circuit 31 is stopped, the controller 50 uses a substitute value (e.g., 0) as the internal recognition value instead of the calculated value that is calculated based on the resolver signal. It should be noted that what is shown here is merely an example, and it is possible to appropriately select what is used as the internal recognition value. The substitute value may be the previous value or a preset value.

When the main battery 5 is not being charged (S102: NO), the processing proceeds to S105 and the controller 50 determines whether the boost circuit 31 is operating or not. When the controller 50 determines that the boost circuit 31 is operating (S105: YES), the controller 50 skips S106 and subsequent steps and keeps operating the boost circuit 31. When the controller 50 determines that the boost circuit 31 is stopped (S105: NO), the processing proceeds to S106. In S106, the drive signal generating unit 51 turns on the boost circuit driving signal to start operation of the boost circuit 31.

In S107, the controller 50 determines whether a recovery condition for the increased-voltage using sensor is met. For example, the controller 50 may determine that the recovery condition is met when a waiting time Xt has elapsed from the start of the operation of the boost circuit 31. The waiting time Xt can be set according to the time required to stabilize the voltages of the internal power supplies 41 and 42 after the start of the operation of the boost circuit 31.

Alternatively, the controller 50 may determine that the recovery condition is met upon receiving a notification that a function which is activated after the boost circuit 31 starts operating has been activated. As a function that is activated after the start of the boost circuit 31, the controller 50 may determine that the recovery condition is met when the voltage of the first internal power supply falls within a normal range. Furthermore, the controller 50 may determine that the recovery condition is met when the excitation periodic signal obtained from the resolver excitation circuit 45 has a normal amplitude and period.

When the controller 50 determines that the recovery condition for the increased-voltage using sensor is not satisfied (S107: NO), this determination process is repeated. When the controller 50 determines that the recovery condition is satisfied (S107: YES), the processing proceeds to S108 and the controller 50 starts calculation of detection value based on the sensor signal and uses the calculated value as the internal recognition value. In detail, the controller 50 stars to calculate the temperature of the inverter element based on the temperature detection signal that is generated from the gate driver IC 47, starts to detect the power voltage of the resolver excitation circuit 45, and starts to calculate the angle of the main motor 10 based on the resolver signal. The controller 50 may continue the calculation or start the calculation before the recovery condition is met and may start to use the calculated value as the internal recognition value of the microcomputer at the timing when the recovery condition is met.

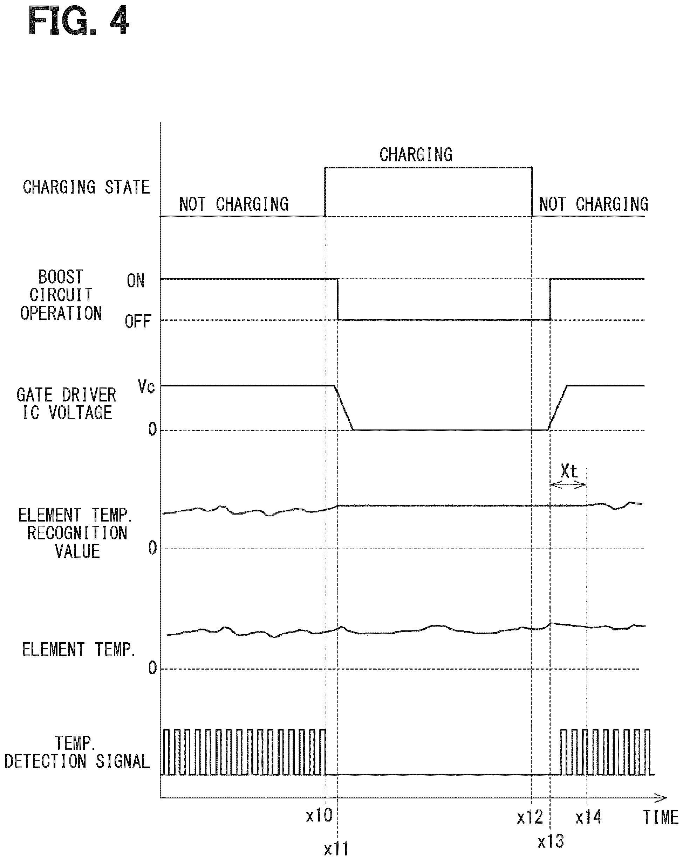

The processing of calculating sensor values in the present embodiment will be described with reference to the time chart in FIG. 4. In FIG. 4, the horizontal axis represents the common time axis. In the vertical axis of FIG. 4, the charging status of the main battery 5, the operation status of the boost circuit 31, the power voltage of the gate driver IC 47, the internal recognition value of the inverter element temperature in the microcontroller, the actual inverter element temperature, and the pulse signal from the gate driver IC 47 are shown from the top. In addition, in FIG. 4, as an example for sensor value calculation of the increased-voltage using sensor, an element temperature calculation based on the temperature detection signal from the gate driver IC 47 is shown.

Before time x10, the main battery 5 is not being charged and the boost circuit 31 is operating normally. Thus, the temperature calculating unit 53 calculates the temperature of the inverter element based on the duty of the temperature detection signal output from the gate driver IC 47. The calculated temperature of the inverter element is almost consistent with the actual temperature of the inverter element.

When the main battery 5 starts to be charged at time x10, the drive signal generating unit 51 deactivates the boost-circuit drive signal and stops operation of the boost circuit 31. When the boost circuit 31 stops, the second internal power supply 42 that is the power supply for the gate driver IC 47 stops, and the temperature detection signal from the gate driver IC 47 also stops. Therefore, when the controller 50 continues calculating the element temperature based on the signal from the gate driver IC 47, the controller 50 may erroneously recognize that the temperature of the inverter element is outside of the normal range even though the actual temperature of the inverter element falls within the normal range.

Therefore, in this embodiment, the temperature calculating unit 53 stops calculating the temperature based on the temperature detection signal from the gate driver IC 47 and uses the substitute value as the internal recognition value of the temperature of the inverter element. In detail, after the time x11 when the boost-circuit drive signal is turned off, the previous value is held as the substitute value. As a result, the microcontroller recognizes that the inverter element temperature is within the normal range. Thus, the controller 50 can recognize that the inverter 21 operates normally and continue the control when the main motor 10 is restarted after completion of the charge of the main battery 5.

When charging of the main battery 5 is completed at time x12, the drive signal generating unit 51 activates the boost-circuit drive signal at time x13, and the operation of the boost circuit 31 starts. When the boost circuit 31 starts operating, the second internal power supply 42 starts up and the power supply of the gate driver IC 47 is restored. There is a delay between when the boost circuit 31 is started and when the gate driver IC 47 becomes able to correctly output a temperature detection signal. In this embodiment, taking into consideration the delay from the start of operation of the boost circuit 31, the temperature calculating unit 53 starts to calculate the temperature and to use the calculated value again as the internal recognition value instead of the substitute value at time x14 when the waiting time Xt has elapsed after the boost-circuit drive signal is activated. This enables to avoid obtaining a temperature that is different from the actual temperature due to a delay between when the boost circuit 31 starts operation and when the pulse signal becomes stable.

As described above, the control unit 30 includes the boost circuit 31, the internal power supplies 41 and 42, and the controller 50. The boost circuit 31 increases the voltage from the auxiliary battery 7. The internal power supplies 41 and 42 supply the voltage increased by the boost circuit 31.

The controller 50 includes the drive signal generating unit 51 and the calculating unit. The drive signal generating unit 51 generates a boost-circuit drive signal for driving the boost circuit 31 . The calculating unit is capable of calculating a value in accordance with the state of the detection target based on a sensor signal that is generated using the internal power supplies 41 and 42. When the controller 50 properly stops the operation of the boost circuit 31 by turning off the boost-circuit drive signal, the controller 50 uses the substitute value as the internal recognition value of the state of the detection target of the controller 50 instead of using the calculated value based on the sensor signal. Stopping the boost circuit 31 causes abnormal behavior of the sensor signal, which further causes erroneous detection of the state of the detection target based on the sensor signal. Using the substitute value can avoid such erroneous detection.

When the controller 50 turns on the boost-circuit drive signal and starts operating the boost circuit 31, and further when the recovery condition is met, the controller 50 starts to use the calculated value based on the sensor signal again instead of using the substitute value. This enables to avoid erroneous detection of the state of the detection target caused by the delay between when the boost circuit 31 is started and when the sensor signal becomes normal.

The detection target is the inverter 21. The temperature calculating unit 53 obtains as a sensor signal a temperature detection signal, which is generated depending on the temperature of the inverter element, from the gate driver IC 47. The inverter element forms the inverter 21 and the gate driver IC 47 outputs a gate signal to the inverter 21. The temperature calculating unit 53 calculates the temperature of the inverter element based on the sensor signal. When the boost circuit 31 is properly stopped, the controller 50 uses the substitute value as the internal recognition value of the temperature of the inverter element instead of using the calculated value. Thereby, erroneous detection of the temperature of the inverter element can be avoided.

The detection target is the resolver excitation circuit 45 that outputs an excitation signal to the resolver 15 that detects the rotational position of the main motor 10. The voltage monitoring unit 55 obtains a signal in accordance with the power voltage of the resolver excitation circuit 45 as a sensor signal and calculates the power voltage. In this embodiment, the power voltage of the resolver excitation circuit 45 is the voltage of the first internal power supply 41. When the controller 50 properly stops the boost circuit 31, the controller 50 uses the substitute value as the internal recognition value of the power voltage of the resolver excitation circuit 45 instead of using the calculated value. Thereby, erroneous detection of the power voltage of the resolver excitation circuit 45 can be avoided.

The detection target is the main motor 10. The angle calculating unit 52 obtains, as a sensor signal, a signal in accordance with the rotational position of the main motor 10 from the resolver 15 that detects the rotational position, and calculates values related to the rotational state of the main motor 10. In this embodiment, the rotation speed, resolver angle, and electrical angle of the main motor 10 are included in the "values related to the rotation state of the main motor 10". When the controller 50 properly stops the boost circuit 31, the controller 50 uses the substitute value as the internal recognition value of the rotation state of the main motor 10 instead of using the calculated value. Thereby, erroneous detection of values related to the rotation state of the main motor 10 can be avoided.

In the embodiment, the control unit 30 corresponds to "a sensor device", the auxiliary battery 7 corresponds to "a battery", the main motor 10 corresponds to "a motor" and "a detection target", each of the resolver excitation circuit 45 and the inverter 21 correspond to "a detection target", the gate driver IC 47 corresponds to "a gate driver circuit", and each of the angle calculating unit 52, the temperature calculating unit 53 and the voltage monitoring unit 55 corresponds to "a calculating unit".

### (Other embodiments)

In the above embodiment, when the boost circuit is stopped during charging of the main battery, substitute values are used to represent the values related to the inverter element temperature, the power voltage of the resolver excitation circuit, and the rotational position of the main motor. In other embodiments, some of the values for which substitute values are used when the boost circuit is stopped may be omitted, or other calculated values related to the increased-voltage using sensor may be replaced with the substitute values.

In the above embodiment, the detection targets are the motor, the inverter, and the resolver excitation circuit. In other embodiments, the detection target may be a device other than the motor, the inverter, and the resolver excitation circuit.

In the above embodiment, when the boost circuit is stopped while the main battery is being charged, a substitute value is used instead of using the detection value of the increased-voltage using sensor. In other embodiments, when power supply to the controller continues and the boost circuit is properly stopped by instructions from the controller other than when the main battery is being charged, a substitute value may be used instead of the detection value of the increased-voltage using sensor.

In the above embodiment, the controller obtains information related to the motor rotational position via the resolver and the RDC. In another embodiment, the RDC may be omitted. Furthermore, the configuration of the control unit may be different from that of the above embodiment, for example, a rotation angle sensor other than a resolver may be used.

The controller and method described in the present disclosure may be implemented by a special purpose computer which is configured with a memory and a processor programmed to execute one or more particular functions embodied in computer programs of the memory. Alternatively, the controller described in the present disclosure and the method thereof may be implemented by a dedicated computer configured as a processor with one or more dedicated hardware logic circuits. Alternatively, the controller and the method described in the present disclosure may be realized by one or more dedicated computer, which is configured as a combination of a processor and a memory, which are programmed to perform one or more functions, and a processor which is configured with one or more hardware logic circuits. The computer programs may be stored, as instructions to be executed by a computer, in a tangible non-transitory computer-readable medium. The present disclosure is not limited to the above embodiments but various modifications may be made further within the scope of the present disclosure without departing from the spirit of the disclosure.

The present disclosure has been made in accordance with the embodiments. However, the present disclosure is not limited to such embodiments and configurations. The present disclosure also includes various modification examples and modifications within the scope of equivalents. Furthermore, various combination and formation, and other combination and formation including one, more than one or less than one element may be made in the present disclosure.

## Claims

1. A sensor device comprising:
a boost circuit (31) configured to increase voltage from a battery (7);
an internal power supply (41, 42) configured to supply the voltage that is increased by the boost circuit; and
a controller (50) including:
a drive signal generating unit (51) configured to generate a boost-circuit drive signal for driving the boost circuit; and
a calculating unit (52, 53, 55) configured to calculate a value in accordance with a state of a detection target (10, 21, 45) based on a sensor signal that is generated using the internal power supply to obtain a calculated value, wherein
the controller is further configured to use a substitute value as an internal recognition value of the state of the detection target, instead of the calculated value based on the sensor signal when stopping the boost circuit by turning off the boost-circuit drive signal.

2. The sensor device according to claim 1, wherein
the controller is configured to use the calculated value again as the internal recognition value instead of the substitute value when a recovery condition is met after starting the boost circuit by turning on the boost-circuit drive signal.

3. The sensor device according to claim 1 or 2, wherein
the detection target includes an inverter (21),
the calculating unit includes a temperature calculating unit (53) configured to:
obtain a temperature signal as the sensor signal from a gate driver circuit (47) that outputs a gate signal to the inverter, the temperature signal being generated in accordance with a temperature of an inverter element; and
calculate the temperature of the inverter element as the calculated value, and
the controller is further configured to:
use the substitute value as the internal recognition value of the temperature of the inverter element instead of the calculated value when the boost circuit is stopped.

4. The sensor device according to any one of claims 1 to 3, wherein
the detection target includes a resolver excitation circuit (45) configured to output an excitation signal to a resolver (15) that detects a rotation position of a motor (10),
the calculating unit includes a voltage monitoring unit (55) that is configured to:
obtain, as the sensor signal, a signal that is generated in accordance with a power voltage of the resolver excitation circuit; and
calculate the power voltage as the calculated value, and
the controller is further configured to use the substitute value as the internal recognition value of the power voltage instead of the calculated value when the boost circuit is stopped.

5. The sensor device according to any one of claims 1 to 4, wherein
the detection target includes a motor (10),
the calculating unit includes an angle calculating unit (52) that is configured to:
obtain, as the sensor signal, a signal that is generated in accordance with a rotation position of the motor from a resolver (15) that detects the rotation position of the motor, and
calculate a value in accordance with a rotation state of the motor as the calculated value, and
the controller is further configured to use the substitute value as the internal recognition value of the rotation state of the motor instead of the calculated value when the boost circuit is stopped.

6. A program for a sensor device, the program being configured to cause at least one controller (50) to:
generate a boost-circuit drive signal for driving a boost circuit (31),
calculate a value in accordance with a state of a detection target (10, 21, 45) based on a sensor signal that is generated using an internal power supply to obtain a calculated value, the internal power supply supplying a voltage increased by the boost circuit, and
use a substitute value as an internal recognition value of the state of the detection target instead of the calculated value based on the sensor signal when stopping the boost circuit by turning off the boost-circuit drive signal.
